# EUROPEAN PATENT SPECIFICATION

(11) **EP 0 778 719 B1**
(45) Date of publication and mention of the grant of the patent: **19.12.2001**
(21) Application number: 97100963.4
(22) Date of filing: 14.07.1988
(51) Int. Cl.: H04Q 11/04, H04L 12/56

(54) **Multi-stage message channel switch**
Mehrstufige Vermittlungseinrichtung für Nachrichtenkanäle
Commutateur de canal de message à plusieurs étages

(30) Priority: 15.07.1987 JP 17460387; 09.10.1987 JP 25366187; 11.11.1987 JP 28324987; 27.04.1988 JP 10251288
(43) Date of publication of application: 11.06.1997
(62) Divisional of application: 88111318.7
(73) Proprietor: Hitachi, Ltd., Chiyoda-ku, Tokyo (JP)
(72) Inventor: Sakurai, Yosihito, Kawasaki-shi, Kanagawa-ken, 210 (JP); Ohtsuki, Kenichi, Miura-gun, Kanagawa-ken (JP); Gohara, Shinobu, Hitachi Maioka Daiichi Shataku, Yokohama (JP); Mori, Makoto, Yokohama (JP); Horiki, Akira, Yokohama (JP); Kato, Takao, Yokohama (JP); Kuwahara, Hiroshi, Kodaira-shi (JP)
(74) Representative: Altenburg, Udo, Dipl.-Phys.

(56) References cited:
- US-A- 4 491 945
- THE BELL SYSTEM TECHNICAL JOURNAL, vol. 32, no. 3, March 1979, NEW YORK, US, pages 406-423, XP002031831 C. CIOS: "A study of non-blocking switching networks"

## Description

The invention relates to a multi-stage message channel switch according to claim 1.

A conventional non-blocking multi-channel switch of Clos type is well known for circuit switch. (See Akimaru: "Outline of Current Exchange Engineering" published by Ohm, 1979, pp. 136 to 137, and C. Clos: A Study of Non Blocking Networks, Bell System Technical Journal Vol. 32, No. 3 (1953)).

A Clos-type multi-stage switch is assumed to have a number m of incoming lines of a primary switch, a number r of outgoing lines thereof, a number k of the incoming and outgoing lines respectively of a secondary switch, a number r of incoming lines of the tertiary switch and a number m of outgoing lines thereof, a number k of the primary switches, a number r of the secondary switches, and a number k of the tertiary switches, so configured that one each of the r outgoing lines of the primary switch is connected to each of the secondary switches, and one each of the k outgoing lines of the secondary switch to each of the tertiary switches. This multi-stage switch construction thus has three stages to satisfy the relationship r ≥ 2m - 1 (Clos's formula).

The "non-blocking" is defined to indicate that if both the incoming and outgoing lines of a switch have an empty capacity, there always exists a bus connecting them.

The Clos-type switch is "non-blocking" if it handles a plurality of calls of a single speed. In the case where each of the calls has a given speed, however, the operating efficiency of the link connecting the unit switches is reduced, and therefore the switch is not "non-blocking". If respective calls are different in speed, a call of low speed may, for example, occupy a part of the link capacity, so that in spite of some empty capacity of the link, a high-speed call may not enter there. Due to this what is called a "decayed phenomenon", the link operating efficiency is reduced, and therefore a blocking occurs even though Clos's equation may be satisfied.

It is an object of the present invention to provide a multi-stage message channel switch of non-blocking exchange which switch can be realized with minimum construction requirements. This object is achieved by a multi-stage message channel switch.

This problem is solved by increasing the links of the multi-stage switch spatially, that is, by increasing not only the number of the links but also the "timing" thereof with an increased link speed. Specifically, although the number of incoming and outgoing lines and links are assumed to be m and r respectively, a switch configuration is such that if the speed of the incoming and outgoing lines is assumed to be unity, the link speed is x times higher to satisfy the relationship r ≥ 2 x {┌(m-1)/(x-1)┐ - 1} + 1.

In this equation, (m-1) on the right side indicates the state in which (m-1) of m incoming lines are busy. (x-1), on the other hand, is the link speed ratio x, less the unity representing the incoming line speed ratio, indicating a limit value of Δ → 0 in a state of (x-1+Δ) where a given link is busy except for a capacity short of a very small amount Δ in a single incoming line in terms of speed.

Thus, ┌(m-1)/(x-1)┐ indicates the number of links in state that in spite of a certain empty capacity in the link, a single incoming line cannot be accommodated, that is, a state where each link is used most inefficiently. The symbol ┌α┐ indicates a minimum integral number over α. It is thus seen that a number { ┌(m-1)/(x-1)┐ - 1} of links except for one are in such a state for both outgoing and incoming lines. Therefore, when the number of links twice as many that is, 2 x { ┌(m-1)/(x-1)┐ - 1}, one new incoming line cannot be accommodated in the links, and if there is another accommodatable link, that is, and if number is 2 x {┌(m-1)/(x-1)┐ - 1} + 1, both the incoming line side (primary link) and the outgoing line side (secondary link) have a link sharing an empty capacity of at least one channel of incoming line.

Thus, if the number r of the links satisfies the relation r ≥ 2 x { ┌(m-1)/(x-1)┐ - 1} + 1, this switch will never block.

Fig. 1 and 2 are diagrams for explaining an embodiment of the present invention.

Fig. 3 is a functional block diagram showing an unit switch used with the present invention.

Fig. 4A to 4C are diagrams for explaining a cell construction used in the unit switch of Fig. 3.

Fig. 5 is a detailed functional block diagram showing and address pointer included in Fig. 3.

Fig. 6 is a diagram for explaining the operation of a series-parallel conversion multiplexer included in Fig. 3.

Fig. 7 is a detailed functional block diagram showing an idle address FIFO included in Fig. 3.

Fig. 8 is a functional block diagram showing another unit switch construction.

Fig. 9 is a diagram for explaining the logics of the read access control in Fig. 8.

Fig. 10 is a functional block diagram showing still another unit switch construction.

Fig. 11 is a diagram for explaining a cell construction used in the embodiment of Fig. 10.

Fig. 12 is a functional block diagram showing still another unit switch construction.

Fig. 13 is a detailed functional block diagram showing address FIFOs included in Fig. 12.

Fig. 14 is a functional block diagram showing still another unit switch construction.

Fig. 15 is a detailed functional block diagram showing address FIFOs included in Fig. 14.

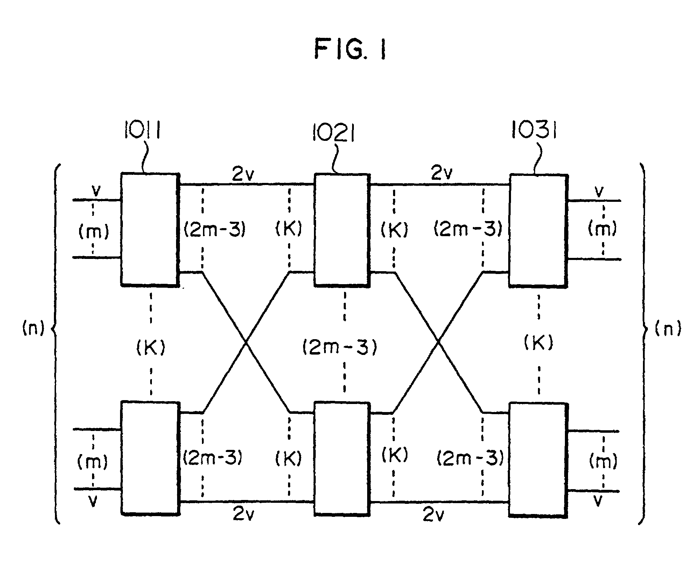

An embodiment of the present invention will be explained below with reference to Fig. 1. As shown in Fig. 1, the number n of incoming and outgoing lines is given as n = mk. A number k of unit switches with a number m of input terminals and a number (2m - 3) of output terminals are arranged as first-stage switches. On the other hand, intermediate-stage switches include a number (2m - 3) unit switches with a number k of input and output terminals, and final-stage switches a number k of unit switches with a number (2m - 3) input terminals and a number m of output terminals. As shown in Fig. 1, the respective unit switches are connected to each other in such a way that the unit switches making up the first-stage switches are connected to all the unit switches of intermediate stage, and those making up the intermediate stage to all the unit switches making up the final stage. In the above-mentioned equation for non-blocking conditions, r ≥ 2 x { ┌(m-1)/(x-1)┐ - 1} + 1, the embodiment under consideration is associated with a case in which x = 2 and r = 2m - 3, satisfying an equality.

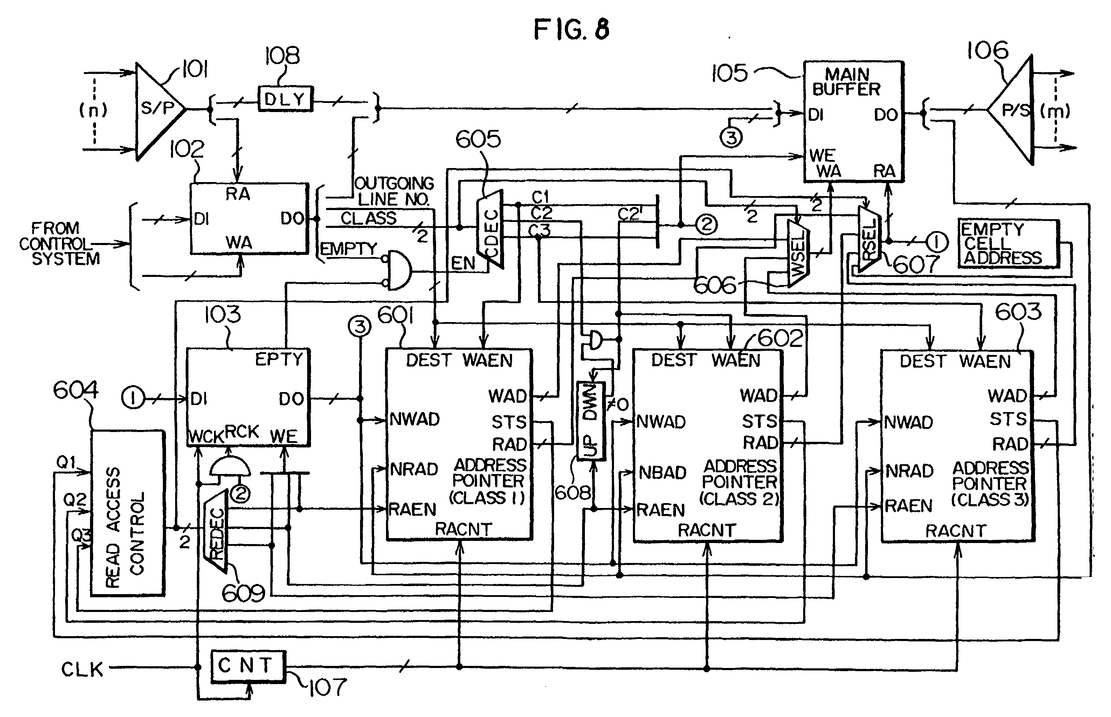

The unit switches in each stage may be made up of those explained with reference to Figs. 8 and 10 or Figs. 12 and 14.

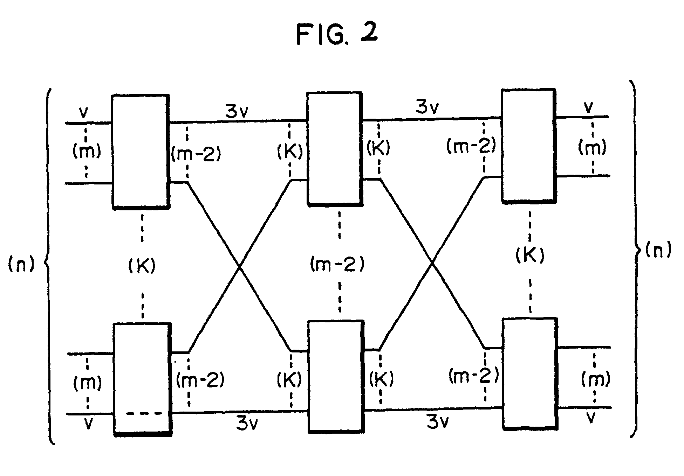

Now, another embodiment of the multi-stage message channel switch is shown in Fig. 2. Unlike in the embodiment in Fig. 1 in which x = 2 and r = 2m - 3 in the above-mentioned equation for non-blocking conditions r ≥ 2 x { ┌(m-1)/(x-1)┐- 1} + 1, the embodiment under consideration is associated with a case in which x = 3 and r = m - 2. In this case, too, an equality is satisfied. The same approach to the configuration may apply as in Fig. 1. The configuration of unit switches is also similar to that of the first embodiment in specific points and therefore will not be explained more in detail.

According to these embodiments, a multi-stage switch capable of non-blocking exchange is realized with the required minimum construction requirements.

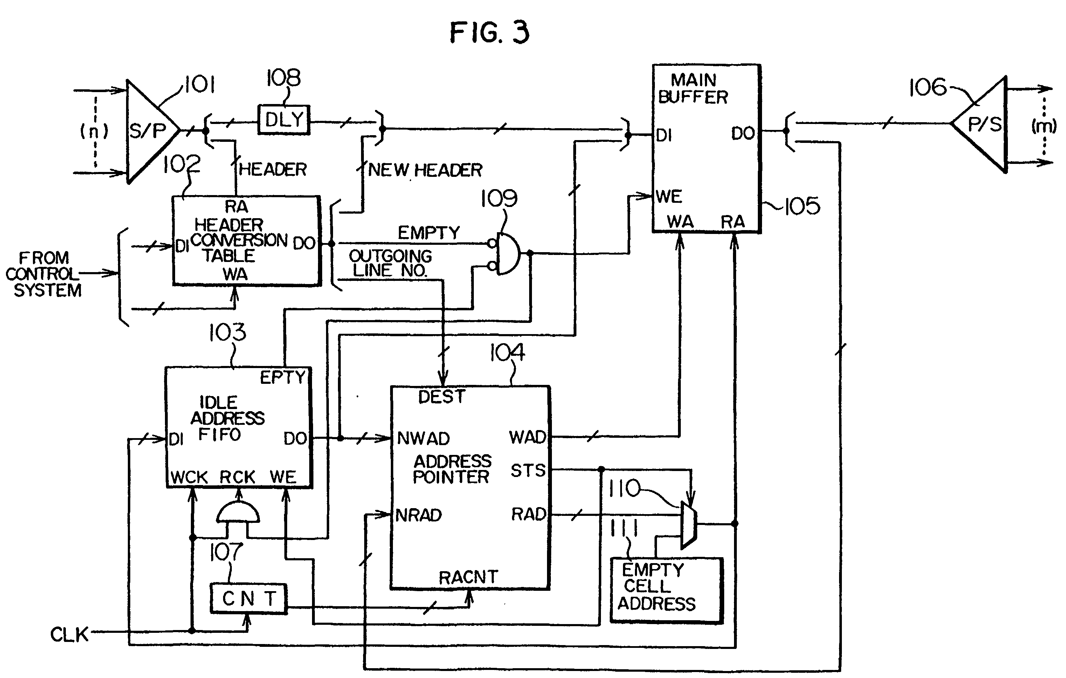

An embodiment of an unit switch will be explained with reference to Fig. 3. In Fig. 3, a number n of incoming lines are connected through a series-parallel conversion multiplexer 101 to a data input (DI) of a main buffer 105. The data output (DO) of the main buffer 105 is connected to a parallel-series conversion multiplex separator and is separated into a number m of outgoing lines. The output portion of the series-parallel conversion multiplexer 101 which corresponds to the cell header is connected to a read address terminal (RA) of a header conversion table 102. The data output (DO) portion of the header conversion table 102 which corresponds to a new header, on the other hand, is connected to the data input of the main buffer 105, the portion thereof corresponding to an empty/busy data (0 for empty) connected through an AND gate 109 to a write enable input (WE) of the main buffer 105, and the outgoing number portion thereof connected to a destination outgoing number input (DEST) of an address pointer 104. The data input (DI) and the write address (WA) of the header conversion table 102 are connected to a control system not shown. The data output (DO) of the idle address FIFO 103 is the data input (DI) of the main buffer 105 and connected to the next write address (NWAD) of the address pointer 104. The empty indication output (EPTY) is connected to the write enable input (WE) of the main buffer 105 through the AND gate 109. The write address output (WAD) of the address pointer 104 is connected to the write address input (WA) of the main buffer 105. The read address output (RAD), on the other hand, is connected through a selector 110 to the read address output (RA) of the main buffer 105 and the data input (DI) of the idle address FIFO 103. The portion of the data output (DO) of the main buffer 105 corresponding to the next read address is connected to the next read address input (NRAD) of the address pointer 104, and the other portions thereof, that is, those portions corresponding to the cell body, are separated through the parallel-series conversion multiplex separator 106 into each outgoing line. The output of the control counter 107 is connected to the input of the selector 110. The cue state indication output (STS) of the address pointer 104 is connected to both the selection input of the selector 110 and the write enable input (WE) of the idle address FIFO 103 at the same time.

First, the write operation of the cell into the main buffer will be explained.

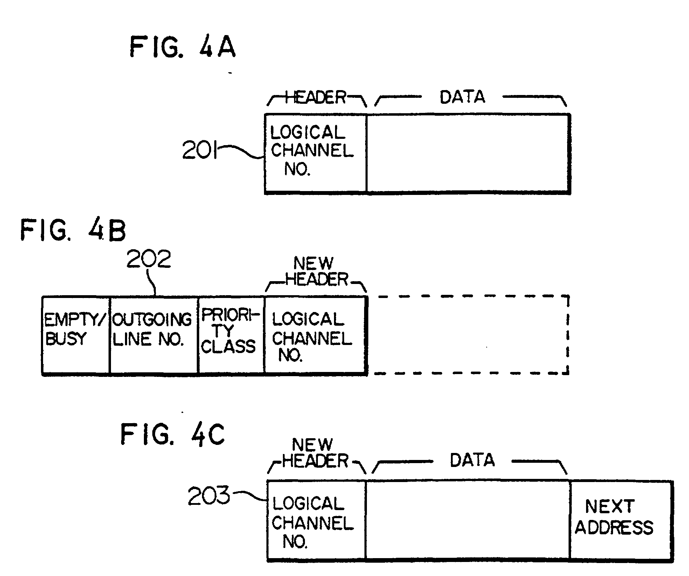

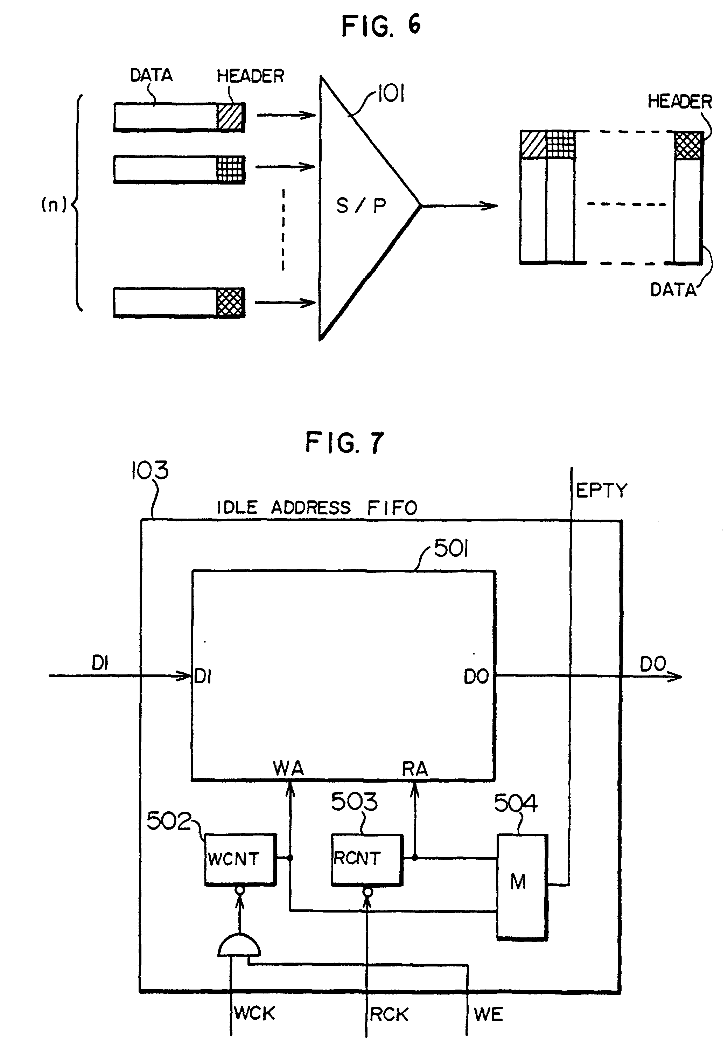

The cells that have arrived from respective incoming lines are subjected to series-to-parallel conversion at the series-parallel conversion multiplexer 101 to facilitate the handling of each cell separately. An example of the construction of the cell arriving from the incoming lines is shown in Fig. 4A, and the concept of the series-parallel conversion multiplexing in Fig. 6. The series-parallel conversion multiplexer is generally made up of a well-known circuit called "the barrel shifter". As shown in Fig. 4A, the cell header carries a logic channel number written thereon, whereby the header conversion table 102 is accessed to obtain the data as to whether the cell of a new logic channel number on the outgoing line side is empty or occupied and a cell destination outgoing line number. These data ware written in the table with the access from the control system at the time of setting a call. Fig. 4B shows an example of the output of the header conversion table 102.

The cell destination outgoing line number is applied to the address pointer 104, and an appropriate write address is obtained accordingly. The write address is obtained accordingly. The write address is applied in advance from the idle address FIFO 103. The cell is written into the main buffer 105 by use of the same write address. If the cell is empty or the idle address FIFO is empty (that is, the main buffer has no empty address), the output of the AND gate 109 is "L", and therefore no data is written in the main buffer 105. At the same time, the read clock (RCK) of the idle address FIFO is also "L" so that the no output of the empty address is produced.

Now, the read operation will be explained. The cell is read in such a manner in accordance with the number generated by the control counter 107, a read address is obtained from the address pointer 104 and is used as a read address of the main buffer. The value of the control counter corresponds to the outgoing line number. Specifically, cells are read one by one sequentially for each outgoing line. The address used as a read address is applied to the data input (DI) of the idle address FIFO 103 and is used again as a write address. If there is no cell addressed to a given outgoing line in the main buffer, a cue state indication output (STS) is produced, so that an address stored in the empty cell address register 111 is selected as a read address of the main buffer 105 by the selector 110. The data in the main buffer corresponding to this address is always kept as an empty cell.

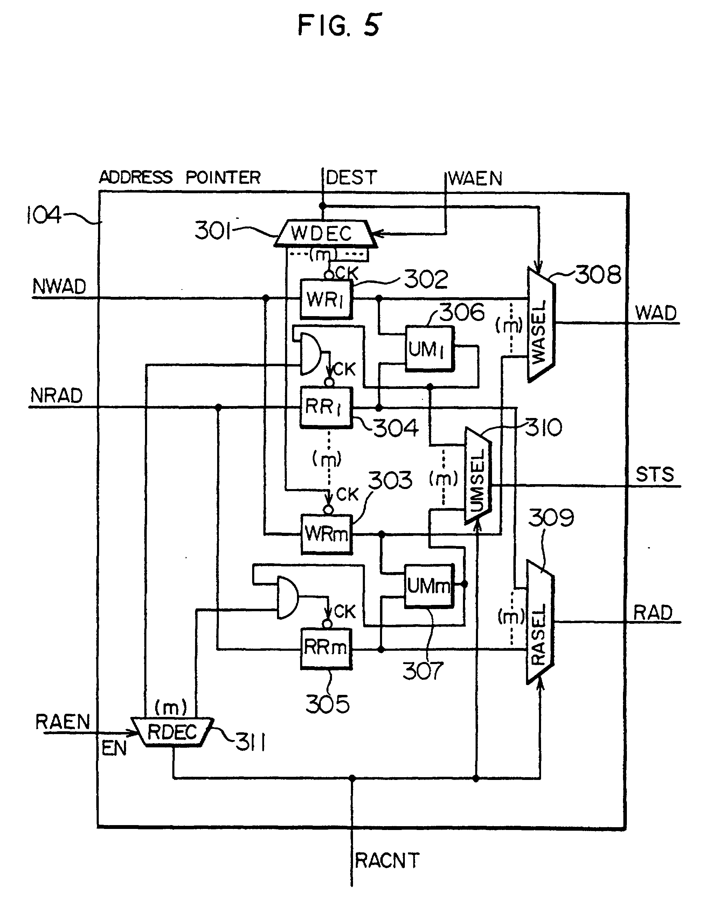

The data output of the idle address FIFO is stored in the main buffer together with the cell. This is to indicate the storage address of the next cell at the same destination as the cell destination outgoing line. A detailed operation will be explained below with reference to Fig. 5. The cell construction in the main buffer is shown in Fig. 4C.

Now, the configuration and operation of the address pointer 104 will be explained with reference to Fig. 5. The outgoing number input (DEST) is connected to the input of the outgoing line number decoder 301 and the selection input of the address selector 308. A number m of decode outputs of the outgoing number decoder 301 are connected respectively to the clock inputs of a number m of write registers (WR_{1 to m}) 302 to 303. The next write address (NWAD) applied from an external idle address FIFO is connected to the input of each write register, and the output of each write register produced as a write address output (WAD) through the write address selector 308. The control counter input (RACNT), on the other hand, is connected to the decoder 311 and the selection input of the read address selector 309. A number m of decode outputs of the decoder 311 are connected as clock inputs of a number m of the read register (RR_{1 to} ₘ) respectively through a gate. The next read address input (NRAD) from an external source is connected to the input of each read register, the output of which makes up a read address (RAD) through the read address selector 309. Non-coincidence detectors 306 and 307 are supplied with outputs of corresponding write register and read register respectively, the outputs of which make up a cue state indication output (STS) through a non-coincidence data selector 130. The outputs of the non-coincidence detectors, on the other hand, are also connected to one of the inputs of the gate.

The portions of a number m of outputs of the write register corresponding to the outgoing lines thereof are selected by the write address selector 308 in response to the outgoing line number input (DEST) thereby to make up an address output (WAD). In the process, a corresponding value held in the write register by the decode output of the outgoing line number decoder 301 is updated to the value (NWAD) supplied from the idle address FIFO. As a result, the NWAD value immediately before being updated corresponds to the write address for the next-arriving cell of the same address as the destination outgoing line number of the cell to be just written. If this NWAD value is stored in the main buffer together with the cell about to be just written, therefore, it is possible to know, when this cell is read out, from which address the next cell destined to the same outgoing line is to be read. In reading a cell, a read register output is selected by a read address selector with the value held in the register is produced as a read address output (RAD). This output is thus used as a read address output. At the same time, the value held in the read register selected is updated by the output of the decoder 311. The input of the read register involved is the next read address stored together with the cell at the time of write operation which is read out of the main buffer, and therefore the address of the next cell destined to the same outgoing line can be held in the read register.

Fig. 7 shows a configuration of the idle address FIFO 103. The idle address FIFO 103 includes a memory 501, a write counter (WCNT) 502, a read counter (RCNT) 503 and a coincidence detector 504. The write counter 502 is a ring counter for producing a write address (WA) and counting the same number as the addresses of the memory 501. The read counter 503 is for producing a read address (RA) and makes up a ring counter for counting the same number as the addresses of the memory 501. When the values of these two counters coincide with each other, it indicates the memory is empty. This condition is detected by the coincidence detector 504 to produce an empty output (EPTY). In this way, this circuit has the same function as a FIFO as a whole.

Now, another embodiment of an unit switch will be explained with reference to Fig. 8. The switching system shown in Fig. 8 operates basically on the same principle as the one shown in Fig. 3. In addition, however, the system in Fig. 8 has a preferential control mechanism. In Fig. 8, the component parts identical to those in Fig. 3 are denoted by the same reference numerals as in Fig. 3 respectively and will not be described again. The embodiment of Fig. 8 is different from that of Fig. 3 most conspicuously in that the embodiment of Fig. 8 has a plurality of address pointers. It is assumed that there are three preferential classes called class 1(C1), class 2(C2) and class 3(C3).

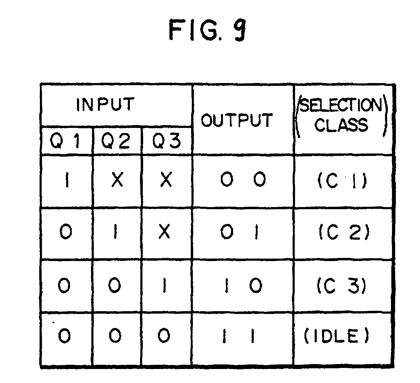

The output of the header conversion table 102 in Fig. 8 includes a class indication. The class indication output is connected to the input of the class decoder (CDEC) 605 and the selection input of the write class selector (WSEL) 606. Each decoder output of the class decoder (CDEC) 605 is connected to the write address enable input (WAEN) of the address pointer of each corresponding class. Of the decoder outputs of the class decoder (CDEC) 605, the output C2 is changed into C2' through an AND gate supplied with the output of the up-down counter 608. The outputs C1, C3 of the class decoder (CDEC) 605 and the OR output of C2' are connected to the write enable (WE) of the main buffer 105. Each cue state indication output (STS) of the address points corresponding to each class including the address pointer (class 1) 601, address pointer (class 2) 602, and the address pointer (class 3) 603 is connected to the input of the read access control 604. The relationship between the input and output of the read access control is shown, for example, in Fig. 9. The output of the read access control 604 is connected to the input of the read class selector (RSEL) 607 and the decoder (REDEC) 609. The decode output of the decoder (REDEC) 609 is connected to the read address enable input (RAEN) of the address pointer of a corresponding class on the one hand and a logical sum of the decode outputs is connected to the write enable input (WE) of the idle address FIFO on the other hand. The up-down counter 608 is supplied with the read address enable input (RAEN) of class 2 as an up input and C2' as a down input. The classes are so defined that class 1 is small in delay time with a low cell loss rate, class small in delay time with somewhat large cell loss rate, and class 3 somewhat long in delay time with small cell loss rate. Class 2, in spite of a somewhat larger cell loss rate, is superior to other classes, and therefore limits the usable capacity of a main buffer. Specifically, the capacity usable for the up-down counter 608 is set by conversion in the number of cells. The up-down counter 608 is decremented by write and incremented by read when this counter becomes zero, therefore, it indicates that the main buffer is used to the limit. Under this condition, the output C2' becomes "L" and no new write occurs for this class. As a result, the class 2 cell that has arrived is discarded. On the other hand, the read priority order is set by the read access control in such a manner that the class I has the least delay time and the class 3 the largest. Specifically, the operation is performed for each outgoing line in such a way that if the class 1 cell is in the main buffer, it is read in the first place, and when the class 1 cue disappears, the class 2 cell is read out. With the disappearance of the class 2 cue, the class 3 cell is read out.

With the arrival of a cell, the class to which the particular cell belongs is identifiable by the output of the header conversion table 102, so that the write address enable output (WAEN) is applied to the address pointer corresponding to the particular class by the class decoder 605. The write address output (WAD) produced from the address pointer, on the other hand, is selected by the write class selector (WSEL) 606 and is used as a write address (WA) for the main buffer. In read operation, by contrast, as mentioned earlier, the read access control 604 monitors a waiting cue corresponding to each outgoing line of each class, and effect control to assure that outputs are in the order of priority among the waiting cues. Specifically, the decode output of the decoder 609 designates an address pointer of the class to be read, and the read class selector 607 selects a read address output produced from the address pointer of the class to be read, thus determining the read address of the main buffer.

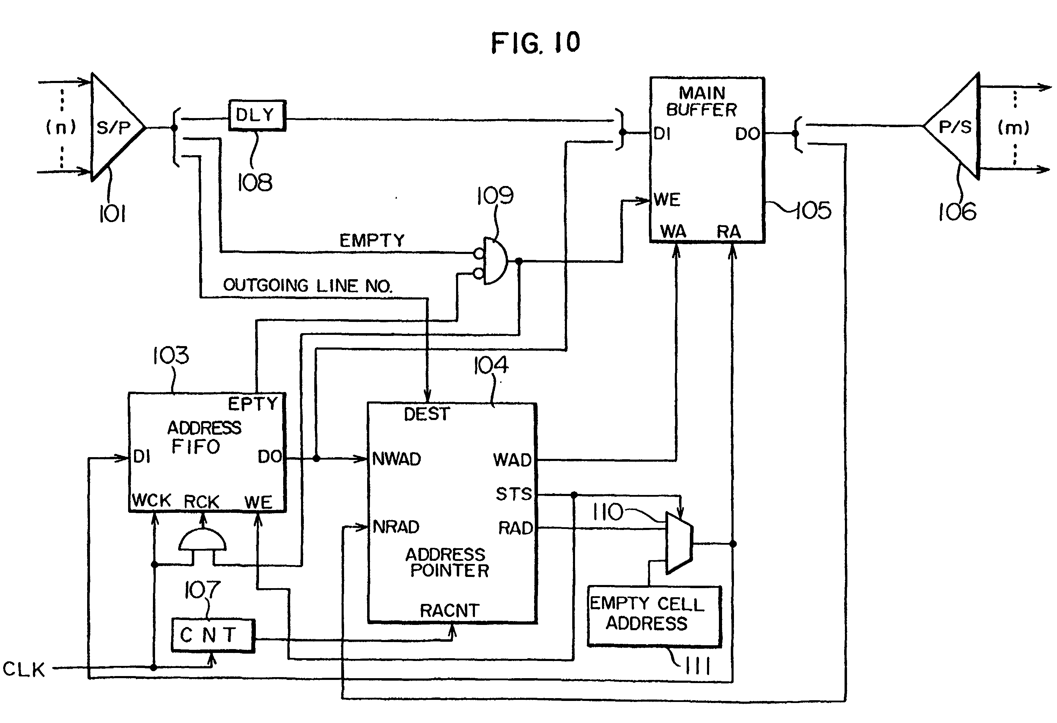

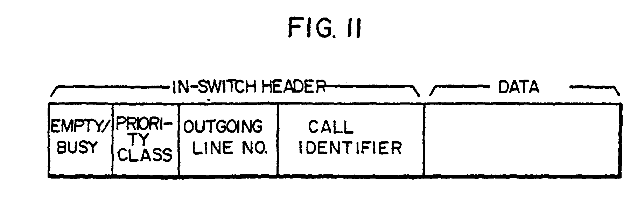

Now, another embodiment of an unit switch will be explained with reference to Fig. 10. The configuration of Fig. 10 is free of the header conversion table 102 in Fig. 3. In the case under consideration, the construction of the cell arriving from the incoming line is shown in Fig. 11. This configuration is suitable for the case in which a header conversion table is included for each incoming line in the front stage of the switch. This configuration also has an advantage that in a multi-stage construction mentioned later, the header conversion may be rendered collectively in advance without respective header conversion by switches in the respective stages.

In each of the embodiment explained above, the main buffer and the idle address FIFO, or the main buffer, idle address FIFO and the address pointer may be formed in integrated circuits on the same chip. Then, a compact switch and a multi-stage construction described above are realized.

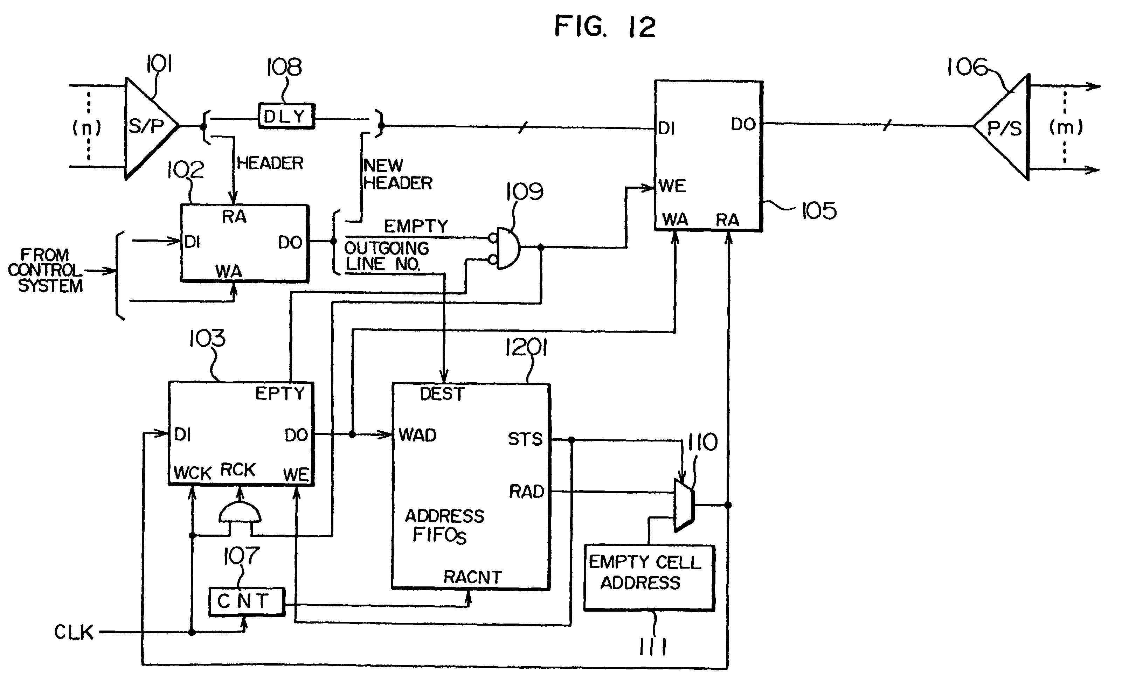

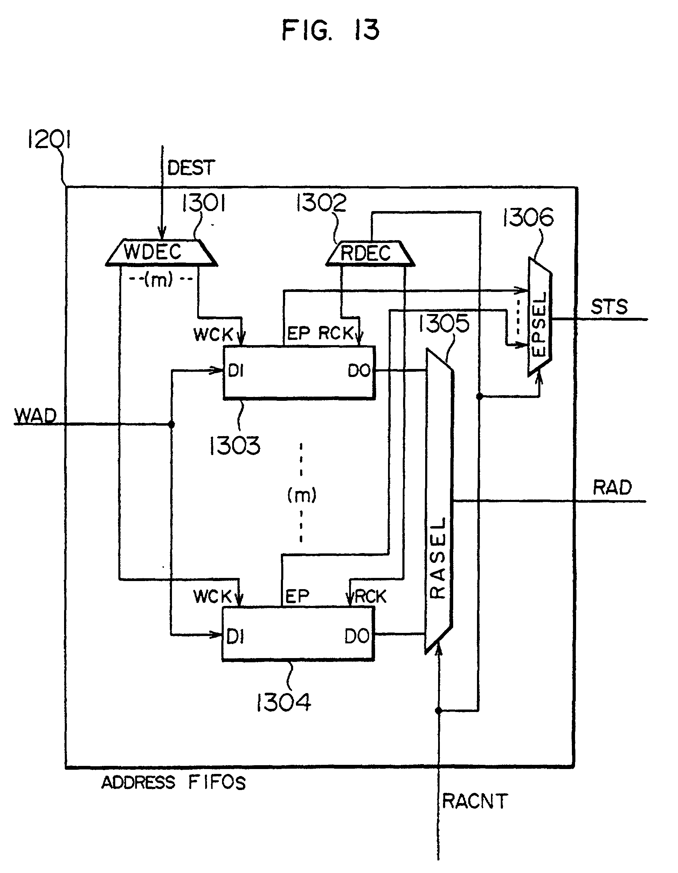

Now, still another embodiment of unit switches will be explained with reference to Fig. 12. In Fig. 12, the configuration is the same as that in Fig. 3 except for address FIFOs 1201, the only difference being in connections. In the embodiment of Fig. 12, the data output (DO) of the idle address FIFO 103 is directly connected to the write address (WA) of the main buffer 105. The main buffer 105 is written only with the cell body, but not with the next address data. The address FIFOs 1201 making up a point of this configuration will be explained with reference to Fig. 13.

The outgoing line number input (DEST) is connected to the outgoing line number decoder (WDEC) 1301, and the m decoder outputs thereof connected to the write signal inputs (WCK) of a number m of FIFO buffers 1303 to 1304. The data input of the FIFO buffers 1303 to 1304 make up the data output of the idle address FIFO in Fig. 12. The data output of the FIFO buffers 1303 to 1304 make up a read address output (RAD) through the read address selector 1305. The read address selector 1305 uses a control counter input (RACNT) as a selection input. The control counter input (RACNT) is further connected to the input of the read sequence decoder 1302 and the selection input of the empty state selector (EPSEL) 1306. The decode output of the read sequence decoder 1302 is connected to the read signal (RCK) input of each FIFO buffer. The empty state signal (EP) of each FIFO buffer makes up a cue state indication output (STS) through empty state selector (EPSEL).

In this embodiment, at the time of writing a cell, an empty address from the idle address FIFO is taken out, and used as the write address of the main buffer as it is. At the same time, the same address is written in the FIFO buffer corresponding to the cell destination outgoing line number in the address FIFOs 1201. At the time of reading, on the other hand, addresses are taken out sequentially from the FIFO buffers, and with these addresses as read addresses, the cells are read out of the main buffer. When the FIFO buffers are empty, an EP output is produced.

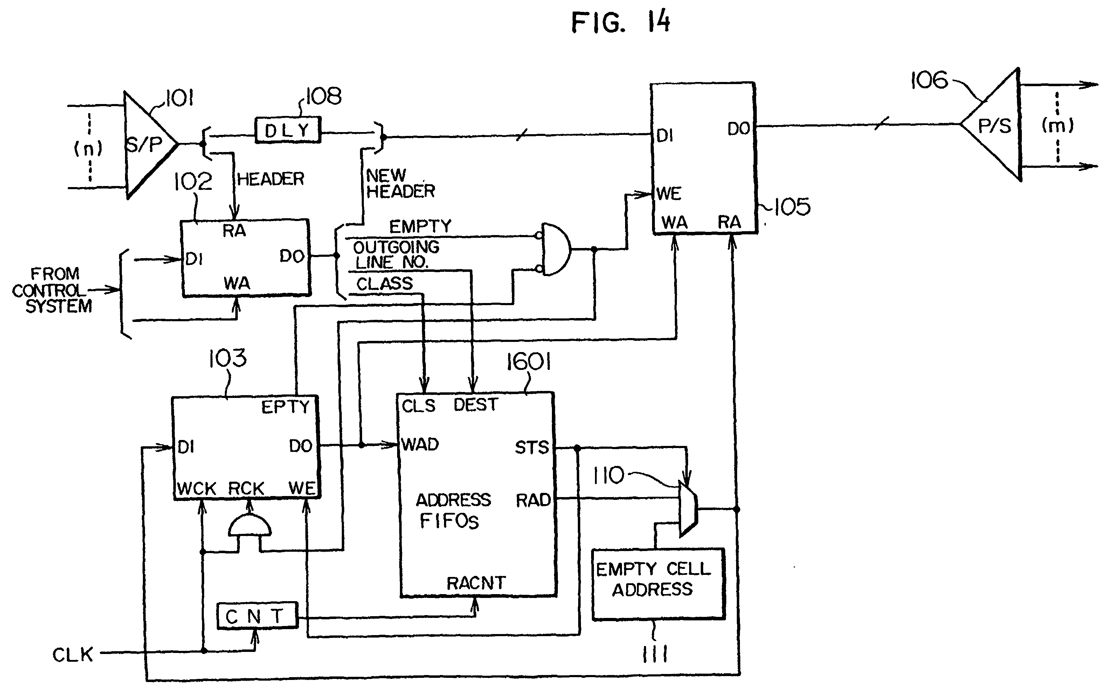

In this configuration, the bufferable number of cells for each outgoing line is limited by the capacity of the FIFO buffers in the address FIFOs. If this capacity is set to a sufficiently large value, however, this configuration is simple as a whole. Fig. 14 shows the configuration of Fig. 12 having a preferential control mechanism added thereto. The data output of the header conversion table 102 has a class indication output, which is connected to the class input (CLS) of the address FIFOs 1601.

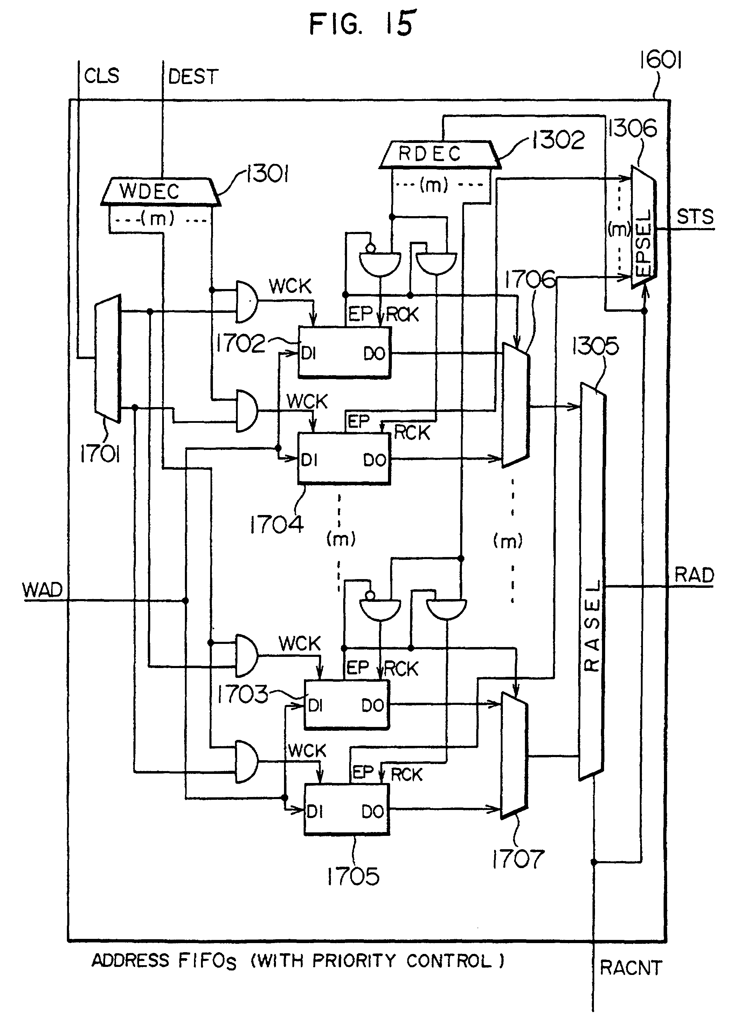

Fig. 15 is a diagram showing a configuration of the address FIFOs with the preferential control function. The component parts included in this diagram which are similar to those in Fig. 13 are not explained. According to the embodiment under consideration, there are two classes of reading order, preferential and non-preferential. Thus, there are two FIFO buffers (such as 1702 and 1704) for each outgoing line. The write signal input (WCK) of the FIFO buffer is a logical product of the decoder output of the outgoing line number decoder 1301 and that of the class data decoder 1701. The read signal input (RCK), on the other hand, is the logical product of the decode output of the read sequence decoder 1302 and the empty state indication output (EP) of each FIFO. According to this configuration, at the time of writing a cell, the write address (WAD) is stored in a FIFO buffer associated with the outgoing line number and class thereof, while at the time of reading a cell, the read address is always produced from the FIFO on this side until the FIFO on preferential read side (such as 1702) becomes empty. And only after this FIFO becomes empty, the other FIFO (such as 1704) is read.

This embodiment has two classes of order of priority relating to the delay time. Instead, the FIFO buffers may be increased for each class to meet a multiplicity of classes. Also, the requirement for classification according to loss rate may be satisfied by controlling the capacity of the FIFO buffers.

It will thus be understood that according to the present invention there occurs no loss of a cell which otherwise might be caused when a new cell is read before a cell is read out of the main buffer. Also, all the areas of the main buffer may be used for all outgoing lines in common, and therefore the memory capacity is usable with high efficiency even if cell destinations are concentrated on a specific outgoing line. As a result, cells are not hardly discarded. This fact is especially advantageous in communications of strong burst characteristic in which cells of the same destinations arrive at a given moment.

## Claims

1. Multi-stage message channel switch for exchanging communication data between a given number of incoming terminals and a given number of outgoing terminals, comprising
a first stage including a plurality of unit switches referred to as primary switches (1011) each having an integral number m of incoming lines, an integral number r of outgoing lines and the ratio of 1 to x between the incoming line speed and the outgoing line speed,
a middle stage including a plurality of unit switches referred to as secondary switches (1021) each having an integral number k of incoming lines and an integral number k of outgoing lines, and the ratio of 1 to 1 between the incoming line speed and the outgoing line speed, and
a final stage including a plurality of unit switches referred to as tertiary switches (1031) each having an integral number r of incoming lines, an integral number m of outgoing lines, and the ratio of x to 1 between the incoming line speed and the outgoing line speed,
the primary switches (1011) being in the number of k,
the secondary switches (1021) in the number of r, and
the tertiary switches (1031) being in the number of k,
the r outgoing lines of the primary switches (1011) being connected to the secondary switches (1021) respectively,
the k outgoing lines of the secondary switches (1021) being connected to the tertiary switches (1031) respectively, the relationship r ≥ 2 x { ┌(m-1)/(x-1)┐ - 1} + 1 being held, wherein the symbol ┌(m-1)/(x-1)┐ indicates the minimum integral number equal to or larger than (m-1)/(x-1).

2. A multi-stage message channel switch according to claim 1, wherein cells arriving from the incoming lines comprise a packet (201) including a header section and a data section, said communication data being exchanged with reference to the data contained in the header section of the packet (201).

3. A multi-stage message channel switch according to claim 1, wherein r = 2m - 3 and x = 2.

4. A multi-stage message channel switch according to claim 1, wherein r = m - 2 and x = 3.

## Patentansprüche

1. Mehrstufige Vermittlungseinrichtung für Nachrichtenkanäle zum Austauschen von Kommunikationsdaten zwischen einer gegebenen Anzahl von ankommenden Anschlüssen und einer gegebenen Anzahl von abgehenden Anschlüssen, umfassend
eine erste Stufe, welche eine Vielzahl von Geräteschaltern enthält, auf welche als Primärschalter Bezug genommen wird (1011), enthält, wobei jeder eine ganzzahlige Anzahl m von ankommenden Leitungen, eine ganzzahlige Anzahl r von abgehenden Leitungen und das Verhältnis von 1 zu x zwischen der ankommenden Leitungsgeschwindigkeit und der abgehenden Leitungsgeschwindigkeit aufweist,
eine mittlere Stufe, welche eine Vielzahl von Geräteschaltern enthält, auf welche als Sekundärschalter (1021) Bezug genommen wird, wobei jeder eine ganzzahlige Anzahl k von ankommenden Leitungen und eine ganzzahlige Anzahl k von abgehenden Leitungen und das Verhältnis von 1 zu 1 zwischen der ankommenden Leitungsgeschwindigkeit und der abgehenden Leitungsgeschwindigkeit aufweist, und
eine Endstufe, welche eine Vielzahl von Geräteschaltern enthält, auf welche als Tertiärschalter (1031) Bezug genommen wird, wobei jede eine ganzzahlige Anzahl r von ankommenden Leitungen, eine ganzzahlige Anzahl m von abgehenden Leitungen und das Verhältnis von x zu 1 zwischen der ankommenden Leitungsgeschwindigkeit und der abgehenden Leitungsgeschwindigkeit aufweist,
wobei die Primärschalter (1011) in der Anzahl von k vorhanden sind,
die Sekundärschalter (1021) in der Anzahl von r, und
die Tertiärschalter (1031) in der Anzahl von k vorhanden sind,
wobei die r abgehenden Leitungen der Primärschalter (1011) mit den Sekundärschaltern (1021) jeweilig verbunden sind,
wobei k abgehende Leitungen der Sekundärschalter (1021) mit den Tertiärschaltern (1031) jeweilig verbunden sind, wobei das Verhältnis r ≥ 2 x { (m-1)/(x-1) - 1} + 1 gehalten wird, wobei das Symbol (m-1)/(x-1) die minimale ganzzahlige Anzahl gleich oder größer als (m-1)/(x-1) kennzeichnet.

2. Eine mehrstufige Vermittlungseinrichtung für Nachrichtenkanäle gemäß Anspruch 1, wobei Zellen, welche von den ankommenden Leitungen ankommen, ein Paket (201) umfassen, welches einen Kopfzeilen-Abschnitt und einen Daten-Abschnitt enthält, wobei die Kommunikations-Daten mit Bezug auf die Daten ausgetauscht werden, welche in dem Kopfzeilen-Abschnitt des Pakets (201) enthalten sind.

3. Eine mehrstufige Vermittlungseinrichtung für Nachrichtenkanäle gemäß Anspruch 1, wobei r = 2m - 3 und x = 2 ist.

4. Eine mehrstufige Vermittlungseinrichtung für Nachrichtenkanäle gemäß Anspruch 1, wobei r = m - 2 und x = 3 ist.

## Revendications

1. Commutateur de voie téléphonique multi-étage pour échanger des données de communications entre un nombre donné de terminaux entrants et un nombre donné de terminaux sortants, comportant
un premier étage comportant une pluralité de commutateurs unitaires (1011) appelés commutateurs primaires ayant chacun un nombre entier m de lignes entrantes, un nombre entier r de lignes sortantes et le rapport de 1 sur x entre la vitesse de lignes entrantes et la vitesse de lignes sortantes,
un étage intermédiaire comportant une pluralité de commutateurs unitaires (1021) appelés commutateurs secondaires ayant chacun un nombre entier k de lignes entrantes et un nombre entier k de lignes sortantes, et le rapport de 1 sur 1 entre la vitesse de lignes entrantes et la vitesse de lignes sortantes, et
un étage final comportant une pluralité de commutateurs unitaires (1031) appelés commutateurs tertiaires ayant chacun un nombre entier r de lignes entrantes, un nombre entier m de lignes sortantes, et le rapport de x sur 1 entre la vitesse de lignes entrantes et la vitesse de lignes sortantes,
les commutateurs primaires (1011) étant au nombre de k,
les commutateurs secondaires (1021) étant au nombre de r, et
les commutateurs tertiaires (1031) étant au nombre de k,
les r lignes sortantes des commutateurs primaires (1011) étant connectées aux commutateurs secondaires (1021), respectivement,
les k lignes sortantes des commutateurs secondaires (1021) étant connectées aux commutateurs tertiaires (1031), respectivement, la relation r ≥ 2 x {┌(m-1)/(x-1) -1}+1┐ étant satisfaite, dans laquelle le symbole ┌(m-1)/(x-1)┐ indique le nombre entier minimal supérieur ou égal à (m-1)/(x-1).

2. Commutateur de voie téléphonique multi-étage selon la revendication 1, dans lequel des cellules arrivant depuis les lignes entrantes comportent un paquet (201) comportant une section d'en-tête et une section de données, lesdites données de communications étant échangées conformément aux données contenues dans la section d'en-tête du paquet (201).

3. Commutateur de voie téléphonique multi-étage selon la revendication 1, dans lequel r = 2m-3 et x = 2.

4. Commutateur de voie téléphonique multi-étage selon la revendication 1, dans lequel r = m-2 et x = 3.
